Europäisches Patentamt

(19) European Patent Office

Office européen des brevets

(11) Numéro de publication: **0 080 965**
**B1**

## (12) FASCICULE DE BREVET EUROPEEN

(45) Date de publication du fascicule du brevet:
**25.09.85**

(21) Numéro de dépôt: **82630098.0**

(22) Date de dépôt: **22.10.82**

(51) Int. Cl.⁴: **G 01 N 1/12,** G 01 K 1/14,
G 01 F 23/00, G 01 K 13/12

(54) Procédé et dispositif pour effectuer des mesures ou des prélèvements dans un bain de métal liquide.

(30) Priorité: **26.11.81 LU 83789**

(43) Date de publication de la demande:
**08.06.83 Bulletin 83/23**

(45) Mention de la délivrance du brevet:
**25.09.85 Bulletin 85/39**

(84) Etats contractants désignés:
**DE FR GB SE**

(56) Documents cités:
**BE - A - 789 301**
**DE - A - 2 355 322**
**DE - A - 2 455 670**

(73) Titulaire: **ARBED S.A., Avenue de la Liberté 19,
L-2930 Luxembourg (LU)**

(72) Inventeur: **Erpelding, Jean, 10 rue de Schouweiler,
L-4945 Hautcharage (LU)**

(74) Mandataire: **Neyen, René, Administration Centrale de
l'Arbed Case postale 1802, L-2930 Luxembourg (LU)**

ACTORUM AG

## Description

L'invention concerne un procédé et un dispositif pour effectuer des mesures, notamment de température, ou des prélèvements dans du métal liquide se trouvant par exemple dans une poche, une poche-torpille ou une lingotière.

La régularité et la représentativité de l'analyse des échantillons prélevés à différents stades de l'élaboration de la fonte ou de l'acier est essentielle pour réaliser l'opération de l'affinage dans des conditions optimales et de pouvoir garantir des qualités d'acier demandées.

Or pour que l'analyse de ces échantillons soit régulière et représentative, il faut que les prises d'échantillon aient lieu au même endroit et surtout à la même profondeur d'immersion. De faibles différences dans l'endroit de prélèvement peuvent conduire à des défauts de représentativité et d'homogénéité des différents échantillons de sorte qu'une précision poussée des méthodes d'analyse subséquentes devient sans grand intérêt.

Il est évident que les conditions très dures dans lesquelles les prélèvements ont lieu (chaleur, fumée, etc.) ne permettent pas à un opérateur de faire des prélèvements manuels satisfaisant aux critères cités ci-dessus, si bien qu'une mécanisation des opérations de descente de la sonde dans le bain de métal fondu, de la durée du maintien dans celui-ci, ainsi que de son retrait subséquent s'est avérée utile.

Dans des installations automatiques connues, le mouvement de descente de la sonde a toujours été arrêté à la même hauteur par rapport à une référence fixe. Cette façon de procéder n'est valable que si les différents récipients sont, tout comme les hauteurs des bains de métal, identiques. Cela est rarement le cas et la hauteur du bain fondu est évidemment fonction de la quantité de métal fondu, de la forme du récipient, du degré d'usure du garnissage.

Pour pallier cet inconvénient, il est connu, d'après la demande de brevet allemand DE-A N°2455670, d'utiliser un organe détecteur de contact fixé sur le porte-sonde et se déplaçant avec celui-ci. Cet organe, dont l'extrémité côté sonde se trouve à une distance déterminée en arrière de la tête de la sonde, arrive au contact de la surface supérieure du bain au cours d'une opération de plongée de la sonde, à un moment où la tête de la sonde se trouve presqu'à la profondeur désirée dans le bain. Cette méthode présente l'inconvénient de nécessiter le montage d'un dispositif auxiliaire à côté de la sonde. Il faudra également fixer l'organe détecteur de contact en un endroit sur le porte-sonde, qui est fonction de la profondeur à laquelle on choisit de faire le prélèvement. Finalement, l'organe détecteur est détruit à chaque opération de prise d'échantillon.

Selon le document BE-A N°789301 le mouvement d'immersion de la sonde est appliqué à un dispositif manométrique, lequel enregistre une pression ferrostatique qui est utilisée pour commander l'arrêt de la sonde à la profondeur désirée.

L'invention a pour but d'éviter les inconvénients précédemment décrits et de proposer un dispositif pour prélever du métal liquide, ou pour effectuer des mesures à des profondeurs d'immersion bien définies et facilement ajustables.

Le problème est résolu selon l'invention par un procédé et un dispositif selon les revendications 1 et 3, respectivement.

On utilise un organe détecteur de contact sensible aux variations du poids apparent de la sonde. Cet organe est intégré dans le système de tiges et de câbles de suspension qui relient la sonde au treuil électrique qui sert à monter et à descendre celle-ci dans le bain de métal liquide.

Les avantages obtenus selon l'invention consistent essentiellement en ce que l'organe détecteur de contact peut être utilisé avec les sondes les plus diverses, que la profondeur à laquelle on opère la prise d'échantillon ne dépend pas de la localisation du détecteur et peut être changée facilement par de simples réglages électriques. D'autre part le dispositif, n'étant pas directement exposé à la chaleur, se distingue par une longue durée de vie.

L'invention sera exposée plus en détail par la description des dessins qui représentent de manière non limitative un mode d'exécution possible du dispositif suivant l'invention.

La fig. 1 représente de façon schématique l'ensemble du dispositif pour effectuer des mesures ou pour prélever des échantillons dans un bain de métal liquide.

La fig. 2 est une coupe schématisée d'un organe détecteur de contact.

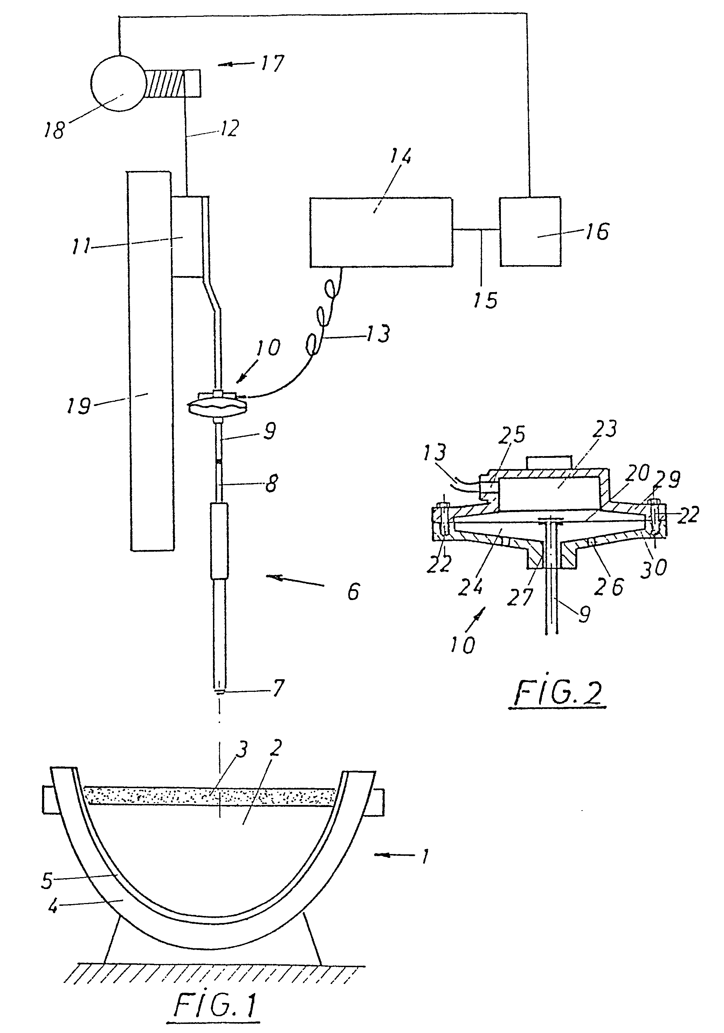

En fig. 1 on voit une sonde 6, suspendue au-dessus d'un récipient 1 constitué par un manteau 4 garni d'un matériau réfractaire 5. Le métal fondu 2 est recouvert d'une couche de scories 3.

La sonde 6 est emmanchée de façon connue par frottement sec sur une tige 8. Cette tige 8 a un diamètre qui est fonction du type de sonde utilisé et qui est en contact avec celle-ci sur une certaine distance.

La sonde est normalement constituée par un tube en carton et comporte derrière un capuchon 7 un petit récipient sous vide et/ou un capteur de température. Une fois immergé dans le bain, le capuchon 7 fond et met ainsi à découvert le récipient qui aspire un échantillon de métal.

La tige 8, aisément échangeable, est fixée à une autre tige 9, qui, elle, est directement fixée à l'organe détecteur de contact 10. Une canalisation en matériau souple 13 relie l'organe détecteur 10 à un convertisseur pression-tension 14.

Le signal de tension respectivement le courant mesuré est transmis via le câble 15 au dispositif 16 de traitement du signal et de commande du treuil électrique 17, qui sert à manœuvrer.

La vitesse de rotation du moteur 18 impose par l'intermédiaire du câble 12, relié au chariot de maintien et de guidage 11, la vitesse de montée et de descente de la sonde. Le chariot 11 se déplace le long du guide 19. La vitesse de descente doit être suffisamment élevée pour éviter que le capuchon 7 ne fonde avant d'avoir atteint la profondeur désirée. Elle est normalement de quelques dizaines de mètres à la minute.

En fig. 2 on distingue le détail de l'organe détecteur de contact 10. La tige 9, qui traverse une pièce 30 par un évidement 27, est fixée à une membrane métallique mince 20 d'une épaisseur de quelques dizièmes de millimètres. La membrane est montée entre les deux pièces 29 et 30 présentant des cavités 23 et 24. Les deux pièces 29 et 30 sont serrées l'une contre l'autre à l'aide de boulons 22.

Des canaux 26 maintiennent en permanence la pression atmosphérique dans la cavité 24. Les variations de pression régnant dans la cavité 23 sont transmises par l'intermédiaire du canal 25 et ensuite du tuyau 13 au convertisseur pression-tension 14.

Le convertisseur peut également être monté sur la pièce 29, ce qui permet l'utilisation d'un tuyau 13 rigide.

Le fonctionnement du dispositif est le suivant:

Avant la prise d'échantillon, la sonde 6 est suspendue à quelques mètres au-dessus du bain de métal. Par suite du poids de la sonde, la membrane 20 est bombée vers le bas et s'appuie partiellement contre la pièce 30.

La sonde descend sous son propre poids vers le récipient 1 à une vitesse de 1 m/s, contrôlée par l'intermédiaire du treuil électrique.

L'impact de la sonde sur la scorie est transmis à la membrane 20, qui comprime le volume 23. Cette surpression P1 est repérée à l'aide des éléments 14 et 16. Au moment ou la tête de la sonde entre dans le métal liquide 2, plus dense que la scorie, il y a création d'une deuxième surpression P2. Le rapport entre les valeurs des deux pressions P1 et P2 dépend évidemment de la consistance de la scorie.

Si on veut par exemple prendre un échantillon à une profondeur de 50 cm, mesurée à partir de l'interface scorie-métal, on arrête le moteur qui assure le déplacement, une demi-seconde après le repérage de la pression P2. En réalité le temps est légèrement inférieur à une demi-seconde par suite de l'inertie du système.

On remarque que la profondeur de prise d'échantillon peut être ajustée aisément par des réglages électroniques rapides.

L'instant de l'impact de la sonde sur le bain liquide étant repéré par observation des variations de poids apparent auxquelles le système de suspension de la sonde est soumis, il est bien évident qu'au lieu d'utiliser un dispositif mécanique tel que décrit plus haut, on peut également utiliser des composants électroniques (par exemple des jauges de contrainte montées entre la tige 9 et le câble 12 ou un contact quelconque, actionné par la tige ou le câble de suspension, agissant directement sur le treuil), qui renseignent des variations de poids et de pression apparents de la sonde. Ces éléments extrêmement précis et rapides pourront donner des renseignements sur la consistance de la scorie. En effet, après l'impact de la sonde sur la scorie, la progression de la sonde dans celle-ci est freinée par la poussée d'Archimède qui est fonction de la densité du milieu rencontré.

## Revendications

1. Procédé pour effectuer des mesures ou des prélèvements dans un bain de métal liquide, éventuellement recouvert d'une couche de scories, comportant des étapes de descente d'une sonde suspendue vers ledit bain à une vitesse déterminée, de maintien dans celui-ci et de retrait subséquent, caractérisé en ce qu'on détecte, lors de l'étape de descente de la sonde, des variations de poids apparent dues à l'impact de la sonde avec les différentes couches du bain liquide et qu'on utilise lesdites variations de poids apparent pour commander le mouvement de descente de la sonde vers la profondeur désirée.

2. Procédé selon la revendication 1, caractérisé en ce qu'on arrête, après repérage desdites variations de poids apparent et avec un retard proportionnel à l'importance de ladite profondeur désirée, le mouvement d'une installation, qui assure la descente et la montée de la sonde.

3. Dispositif pour effectuer des mesures ou des prélèvements dans un bain de métal liquide (2) comportant une sonde (6) de mesure ou de prélèvement, une installation (11, 12, 17-19) pour descendre et monter ladite sonde sous des conditions contrôlées, ainsi qu'un organe détecteur de contact (10) de la sonde avec le bain, caractérisé en ce que l'organe détecteur de contact est un élément sensible aux variations de poids apparent de la sonde (6).

4. Dispositif selon la revendication 3, caractérisé en ce que l'organe détecteur de contact (10) est un composant pneumatique monté entre la sonde (6) et l'installation (11, 12, 17-19) qui sert à descendre et à monter la sonde.

5. Dispositif selon la revendication 4, caractérisé en ce que le composant pneumatique est constitué par une membrane (20) mince montée entre deux pièces (29, 30) présentant des cavités (23, 24), notamment en forme de calotte sphérique, que la membrane (20) est reliée à la sonde (6) et que l'une des cavités (23) est reliée à un élément détecteur de pression.

6. Dispositif selon la revendication 5, caractérisé en ce que la cavité (24) de la pièce inférieure (30) est maintenue en permanence à pression atmosphérique et que la cavité supérieure (23) est reliée à des instruments de mesure de pression.

7. Dispositif selon la revendication 3, caractérisé en ce que l'organe détecteur de contact est un composant électronique, notamment un dispositif piézo-électrique.

8. Dispositif selon la revendication 3, caractérisé en ce que l'organe détecteur de contact peut être à base inductive, capacitive, optique, résistive, par effet Hall, ou autre.

## Claims

1. Method for carrying out a measuring or sampling operation in a molten metal bath, possibly covered by a slag layer, comprising the steps of lowering a suspended probe towards the bath at a determined speed, keeping the probe in the bath and subsequently withdrawing it, characterised in that during the lowering step of the probe the variations in apparent weight resulting from the impact of the probe upon the different layers of the liquid bath are detected and that the variations in apparent weight are used to control the descending motion of the probe towards the desired level of depth.

2. Method according to Claim 1, characterised in that one interrupts the motion of an appliance which either raises or lowers the probe, after having detected the variations in apparent weight and that one provides for a time delay that is proportional to the desired depth.

3. Apparatus for carrying out a measuring or sampling operation in a molten metal bath (2) comprising a sampling or measuring probe (6), an appliance (11, 12, 17-19) for lowering and raising said probe under controlled conditions, as well as a contact detector (10) of the probe with the bath, characterised in that the contact detector is a device, which is sensitive to the variations in apparent weight of the probe (6).

4. Apparatus according to Claim 3, characterised in that the contact detector (10) is a pneumatic device mounted between the probe (6) and the appliance (11, 12, 17-19) for lowering and raising the probe.

5. Apparatus according to Claim 4, characterised in that the pneumatic device is constituted by a thin membrane (20) mounted between two housing members (29, 30) with cavities (23, 24), showing in particular the shape of a portion of a sphere, that the membrane (20) is connected to the probe (6) and that one of the cavities (23) is connected to a pressure sensitive detector.

6. Apparatus according to Claim 5, characterised in that the cavity (24) of the lower housing member (30) is maintained at atmospheric pressure and that the upper housing member (23) is connected to pressure measuring instruments.

7. Apparatus according to Claim 3, characterised in that the contact detector is an electronical device, in particular a piezo-electrical device.

8. Apparatus according to Claim 3, characterised in that the contact detector is based on an inductive, capacitive, optical, Hall effect or any other effect.


**Patentansprüche**

1. Verfahren zum Messen oder Probenehmen in einem Bad von flüssigem Metall, welches gegebenenfalls mit einer Schlackenschicht bedeckt ist, bei dem eine Sonde mit einer vorgegebenen Geschwindigkeit in das Bad herabgesenkt, darin behalten und wieder herausgezogen wird, dadurch gekennzeichnet, dass man während des Herabsenkens der Sonde, die vom Auftreffen der Sonde mit den verschiedenen Schichten des flüssigen Bades stammenden scheinbaren Gewichtsänderungen erfasst und, dass man diese scheinbaren Gewichtsänderungen verwendet um das Herabsenken der Sonde bis zu der gewünschten Tiefe zu steuern.

2. Verfahren nach Anspruch 1, dadurch gekennzeichnet, dass man die Bewegung einer Anlage stoppt, welche das Herabsenken und das Heraufziehen der Sonde gewährleistet, nachdem besagte scheinbaren Gewichtsänderungen ausgemacht wurden und dies mit einem Zeitverzug welcher proportional zu der gewünschten Tiefe ist.

3. Vorrichtung zum Messen oder Probenehmen in einem flüssigen Metallbad (2) umfassend eine Sonde (6) zum Messen oder Probenehmen, eine Anlage (11, 12, 17-19) um besagte Sonde unter kontrollierten Bedingungen herabzusenken und heraufzuziehen, sowie einen Kontakt-Fühler (10) der den Kontakt der Sonde mit dem Bad erfasst, dadurch gekennzeichnet, dass der Kontakt-Fühler ein Baukörper ist, welches auf die Änderungen des scheinbaren Gewichts der Sonde (6) anspricht.

4. Vorrichtung nach Anspruch 3, dadurch gekennzeichnet, dass der Kontakt-Fühler (10) ein pneumatischer Baukörper ist, welcher, zwischen der Sonde (6) und der Anlage (11, 12, 17-19), die das Herabsenken und das Heraufziehen der Sonde bewerkstelligt, angeordnet ist.

5. Vorrichtung nach Anspruch 4, dadurch gekennzeichnet, dass der pneumatische Baukörper aus einer dünnen Membrane (20) besteht, die zwischen zwei, insbesondere halbkugelförmige Aushöhlungen (23, 24) vorweisende Bauteile (29,30) eingebaut ist, dass die Membrane (20) mit der Sonde (6) in Verbindung steht und, dass eine der Aushöhlungen (23) mit einem auf Druck ansprechenden Gerät in Verbindung steht.

6. Vorrichtung nach Anspruch 5, dadurch gekennzeichnet, dass die Aushöhlung (24) des unteren Bauteiles (30) durchgehend auf atmosphärischem Druck gehalten wird und, dass die obere Aushöhlung (23) mit einem Druck-Messinstrument in Verbindung steht.

7. Vorrichtung nach Anspruch 3, dadurch gekennzeichnet, dass der Kontakt-Fühler aus einem elektronischen Baukörper, insbesondere einem piezo-elektrischen Baukörper besteht.

8. Vorrichtung nach Anspruch 3, dadurch gekennzeichnet, dass der Kontakt-Fühler auf einem induktiven, kapazitiven, optischen, resistiven Effekt, oder auf Hall Effekt usw. beruht.

*FIG.1*

*FIG.2*